Europäisches Patentamt

**European Patent Office** (11) Numéro de publication: **0 192 594**

**Office européen des brevets** **B1**

(12) **FASCICULE DE BREVET EUROPÉEN**

(45) Date de publication du fascicule du brevet: 12.07.89 (51) Int. Cl.⁴: **B 65 G 47/14**

(21) Numéro de dépôt: **86440006.4**

(22) Date de dépôt: **24.01.86**

(54) Dispositif de séparation et d'espacement d'objets placés en vrac.

(30) Priorité: **15.02.85 FR 8502475**

(43) Date de publication de la demande: **27.08.86 Bulletin 86/35**

(45) Mention de la délivrance du brevet: **12.07.89 Bulletin 89/28**

(84) Etats contractants désignés: **AT BE CH DE FR GB IT LI LU NL SE**

(56) Documents cité:
**EP-A-0 136 756**
**DE-A-279 069**
**US-A-3 285 387**
**US-A-3 565 234**

(73) Titulaire: **REDOUTE CATALOGUE Société Anonyme:, 57 rue Blanchemaille, F-59100 Roubaix (Nord) (FR)**

(72) Inventeur: **Defretin, Patrick, 73 Rue du Calvaire, F-59510 Hem (Nord) (FR)**

(74) Mandataire: **Lepage, Jean- Pierre, Cabinet Lepage & Aubertin Innovations et Prestations 23/25, rue Nicolas Leblanc B.P. 1069, F-59011 Lille Cédex 1 (Nord) (FR)**

## Description

L'invention est relative à un dispositif de séparation et d'espacement d'objets de formes diverses, mous de par leur nature, ou enveloppés dans un emballage souple. Elle sera notamment mais non exclusivement adaptée à l'alimentation séquentielle d'une machine de traitement d'objets.

L'invention trouvera tout particulièrement son application dans les domaines industriels qui nécessitent une manutention en continu notamment dans l'alimentation de machines diverses qui nécessite une entrée des objets séparés, un par un, sans production de double, de façon cadencée selon un pas prédéterminé. Elle pourra être notamment utilisée pour alimenter des machines de tri, des machines d'emballage, des systèmes de préparation de commande. L'invention sera notamment mais non exclusivement utilisée dans l'industrie de la vente par correspondance car elle met en oeuvre une quantité importante de machines automatiques à alimenter séquentiellement.

Actuellement, il existe à l'entrée de certaines machines automatiques des systèmes d'égrenage d'objets qui sont facilement utilisables avec des objets de forme volumique constante et présentant une certaine consistance. Ces systèmes sont généralement appelés transporteurs ou convoyeurs à zones d'accumulation.

Une zone d'accumulation est généralement créée lorsque les objets déplacés par le transporteur sont en trop grand nombre pour alimenter un poste de travail. Dans ce cas, les objets surabondants restent bloqués et s'agglutinent pour former une zone d'accumulation avant d'être prélevés au fur et à mesure des besoins.

Pour faciliter l'accumulation des objets et pour éviter leur détérioration, la chaîne de convoyage est généralement équipée de moyens qui autorisent un mouvement relatif entre les objets transportés et le transporteur. Ces moyens peuvent être notamment constitués par des galets ou des rouleaux.

Pour égrener les objets à l'entrée d'une machine, on peut prévoir un système d'entonnoir ne laissant passer qu'un seul objet à la fois. Cette disposition est possible avec des objets durs qui ne peuvent se superposer que difficilement et dont les formes et dimensions sont constantes. Lorsqu'il s'agit d'égrener des objets de formes diverses se présentant sous la forme d'enveloppes plus ou moins grandes et bombées, il arrive que dans la zone d'accumulation, ces objets se superposent et passent l'entonnoir d'égrenage superposé. Dans ce cas, deux objets sont dirigés vers l'entrée de la machine à alimenter.

De plus, si les objets sont repérés et doivent être délivrés d'une manière ordonnée, ce dispositif est totalement inefficace car dans la zone d'accumulation, en se superposant, les différents objets se mélangent et ne sont plus repérables.

De ce fait lorsqu'on a manutentionné des objets de formes diverses, mous de par leur nature ou enveloppés dans un emballage souple, la manutention s'effectue manuellement. Les différents objets à manipuler sont placés dans des bacs, un opérateur les prélève unitairement de ce bac pour les poser sur un tapis roulant les dirigeant vers l'entrée de la machine de traitement. Cette opération est fastidieuse pour l'opérateur et de plus n'autorise que des cadences de faibles valeurs de l'ordre de 300 paquets par heure, alors que certaines machines automatiques acceptent des cadences de 5 000 à 10 000 objets traités par heure.

Actuellement, il apparaît donc très difficile d'obtenir une succession à pas réguliers d'objets de formes diverses, mous de par leur nature ou enveloppés dans un emballage souple de matériaux divers à partir d'un vrac pour alimenter séquentiellement une machine de traitement d'objets, si ce n'est que par des opérations manuelles.

Le document EP-A2-0 136 756 est à considérer comme faisant partie de l'état de la technique selon l'article 54 paragraphes 3 et 4 de la CBE. Toutefois, ce document n'est à considérer qu'au titre de la nouveauté et ne doit pas être pris en considération pour apprécier l'activité inventive.

Il est également connu du document US-A-3 285 387 un système de manutention continue destiné au transfert d'objets rigides de formes prédéterminées et constantes. Ce système est organisé autour d'un plateau incliné dont la surface est perforée d'orifices. Le plateau est soumis à un système à dépression.

On alimente la partie basse de ce plateau par des objets en vrac et on récupère ces objets à la partie haute du plateau par un système de glissières prélevant les objets maintenus du plateau.

Toutefois, un tel système n'est pas du tout adapté à la manutention d'objets de formes diverses, mous de par leur nature ou enveloppés dans un emballage souple. L'utilisation du dispositif américain précité pour de tels articles provoquerait d'une part une non-efficacité du système de maintien des objets et d'autre part un bourrage au niveau de la délivrance des objets.

Le but de la présente invention est de proposer un dispositif de séparation et d'espacement d'objets, qui soit apte à alimenter séquentiellement une machine de traitement d'objets, à partir d'objets placés en vrac, de formes diverses, mous de par leur nature ou enveloppés dans un emballage souple de matériaux divers, afin de délivrer en continu des objets séparés un par un, sans production de double, de façon cadencée, selon un pas prédéterminé.

Un autre but de la présente invention est de proposer un dispositif de séparation et d'espacement d'objets de formes diverses mous de par leur nature, ou enveloppés dans un emballage souple, qui autorise une accumulation desdits objets.

Selon la présente invention, le dispositif de séparation et d'espacement d'objets de formes diverses, mous de par leur nature, ou enveloppés dans un emballage souple, comporte:

- des moyens de transport et de renversement desdits objets, constitués par un transporteur dont la surface porteuse de charge décrit une courbe fermée dans un plan sensiblement vertical qui comprend une surface porteuse de charge en mouvement continu définissant un chemin de déplacement, permettant de véhiculer les objets au cours duquel on prévoit une zone d'alimentation d'objets en vrac, une zone d'accumulation des objets à manipuler, une zone de séparation dans laquelle on préléve des objets de la zone d'accumulation pour les séparer et pour provoquer la chute par gravité des objets non maintenus et finalement pour les délivrer, un par un, de façon cadencée, selon un pas prédéterminé dans, une zone de délivrance des objets, située sensiblement à 180 de la zone d'alimentation,
- des moyens d'alimentation par lesquels on amène, par une chute par gravité, dans ladite zone d'accumulation, les objets en vrac afin que certains des objets présentent une surface en contact avec la dite surface porteuse,
- des moyens de retenue pour maintenir en contact avec ladite surface porteuse les objets contigus à celle-ci, constitués par une multitude de dispositifs préhenseurs pneumatiques d'aspiration disposés à intervalles réguliers tout autour de la périphérie du transporteur sans fin et complétés par des moyens de positionnement situés en alternance avec lesdits dispositifs préhenseurs et espacés régulièrement en fonction de la nature des objets à manipuler autour de la périphérie du transporteur sans fin,
- des moyens pour évacuer les objets séparés, par une chute par gravité, un par un, de façon cadencée, selon un pas prédéterminé en dehors de la zone de délivrance.

La présente invention sera mieux comprise à la lecture de la description qui va suivre accompagnée des dessins en annexe qui en font partie intégrante.

La figure 1 représente une vue schématique de face d'un système de manutention continue selon un premier mode de réalisation de la présente invention.

La figure 2 représente une vue de profil du système de manutention illustré à la figure 1.

La figure 3 représente schématiquement une vue de profil selon un deuxième mode de réalisation de la présente invention.

La figure 4 représente une vue schématique de face d'un système de manutention continue selon un autre mode de réalisation de la présente invention.

Dans de nombreuses industries, on utilise des systèmes de manutention continue pour déplacer des objets d'un endroit à un autre, notamment pour alimenter des machines automatiques de traitement de ces objets comme des machines d'emballage, des machines de tri, des machines de préparation de commande, etc.

La plupart de ces systèmes de manutention continu utilise des transporteurs ou convoyeurs à bande selon lesquels sont posés les objets à véhiculer. Certains d'entre eux sont quelquefois adaptés particulièrement aux produits qu'ils véhiculent mais dans ce cas, ils ont une utilisation bien spécifique et ne sont donc pas destinés à des objets quelconques.

Lorsque la dimension des objets à véhiculer est connu bien régulière, de nombreux convoyeurs disposent des filtres ne laissant passer qu'un seul objet à la fois, les autres étant maintenus dans une zone d'accumulation en amont de ce filtre.

Lorsqu'il s'agit de déplacer des objets placés en vrac, de formes diverses, mous de par leur nature ou enveloppés dans un emballage souple, il est difficilement envisageable d'utiliser ce principe de filtre du fait notamment de la diversité des formes. Par ailleurs, si les objets avaient été déposés dans un ordre précis, lors de leur passage dans la zone d'accumulation, ils se mélangent en se chevauchant détruisant l'ordre pré-établi. De plus, il se peut que malgré le filtrage utilisé, deux objets superposés puissent passer et de ce fait être la cause d'un défaut de fonctionnement de la machine de traitement à alimenter.

Le procédé de manutention continue de la présente invention est notamment mais non exclusivement adapté à l'alimentation séquentielle d'une machine de traitement d'objets par lequel à partir d'objets de formes diverses, de masses volumiques diverses, placés en vrac, mous de par leur nature ou enveloppés dans un emballage souple de matériaux divers, on délivre en continu des objets séparés un par un, sans production de double, de façon cadencée selon un pas prédéterminé et une cadence élevée fonction de la machine de traitement d'objets à alimenter.

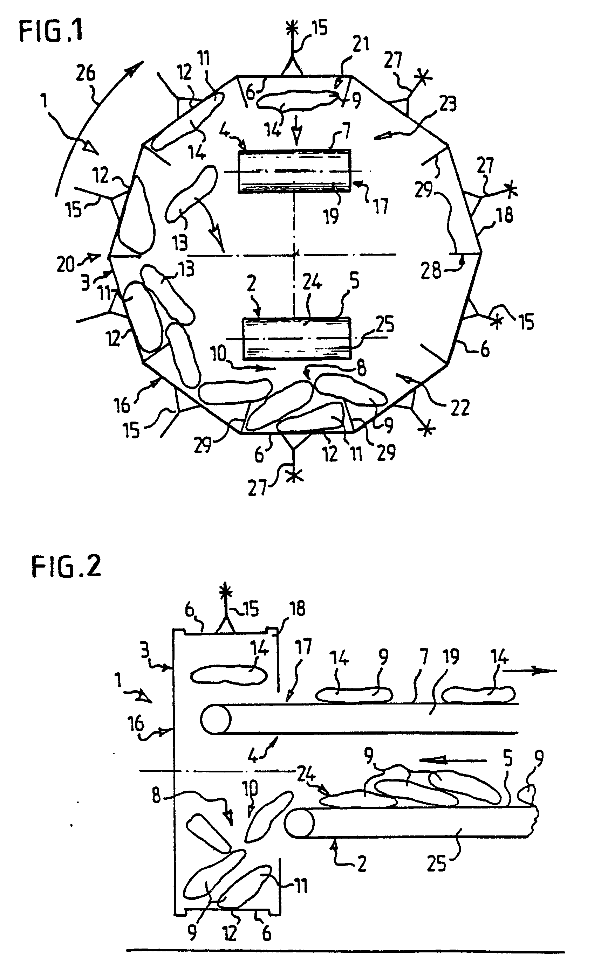

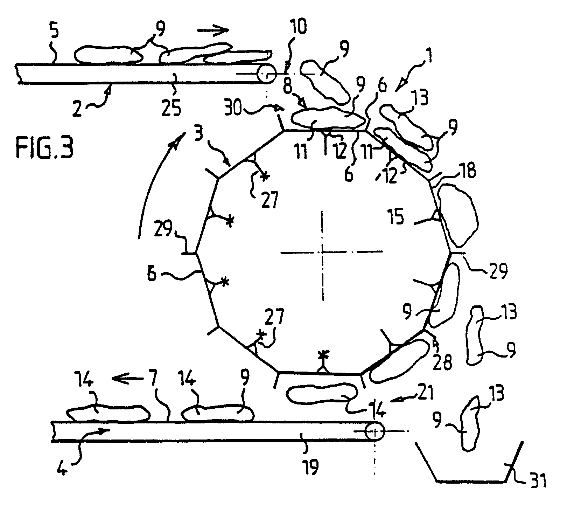

L'explication générale du procédé de la présente invention, mis en oeuvre dans un système de manutention en continu 1, est faite en relation avec les figures 1 et 2 qui représentent un premier mode de réalisation de l'invention, Néanmoins, ce procédé pourrait être appliqué à d'autres systèmes de manutention de configurations géométriques différentes qui seront notamment decrits ci-après et montrés aux figures 3 à 6. Selon la présente invention, on procède de la manière décrite ci-dessous.

On dispose des moyens de transport 3 et 4 présentant une surface porteuse de charge respectivement 6 et 7 en mouvement et comportant au cours de son chemin une zone d'accumulation 8 des objets 9 à manipuler.

On aménage une alimentation 10 en vrac des objets en permanence dans cette zone d'accumulation 8, certains des objets, appelés objets contigus 11, présentant alors une face 12 en contact au moins temporairement avec la surface porteuse 6.

On maintient mécaniquement au niveau de la surface porteuse 6 les objets contigus 11. On effectue ce maintien mécanique au niveau de la surface porteuse 6 notamment par effet pneumatique ou électro-magnétique ou par des dispositifs mécaniques à pincement ou à griffes.

Ensuite, on renverse progressivement la surface porteuse 6 dans le cours de son chemin pour séparer les objets 9. De ce fait, on provoque la chute des objets entraînés mais non maintenus 13 au moins par gravité.

Enfin, on cesse le maintien des objets contigus 11 sur la surface porteuse 6 pour délivrer les objets séparés 14 un par un de façon cadencée.

Par ailleurs, selon le mode de réalisation du système de manutention de la présente invention, on recycle les objets non maintenus 13 chutant vers la zone d'accumulation 8 pour être susceptible d'être appréhendés.

Le procédé de manutention continue de la présente invention qui vient d'être décrit peut notamment être mis en oeuvre dans une première réalisation de système de manutention continue 1 représenté aux figures 1 et 2.

Ce système de manutention continue 1 permet de véhiculer des objets de formes diverses, de masses volumiques diverses, mous de par leur nature ou enveloppés dans un emballage souple de matériaux divers, et de délivrer en continu les objets séparés, un par un sans production de double, de façon cadencée selon un pas prédéterminé.

Généralement, selon la présente invention, le système de manutention continu 1 et plus précisément le dispositif de séparation et d'espacement d'objets, comporte essentiellement:

- des moyens de transport 3 et 4 des objets 9 comprenant une surface porteuse de charge 6 et 7 en mouvement continu,
- des moyens d'alimentation 10 par lesquels on amène des objets en vrac 9 afin que certains objets, appelés objets contigus 11 présentent au moins temporairement une face 12 en contact avec la surface porteuse 6,
- des moyens de retenue 15 pour maintenir au niveau de la surface porteuse 6 les objets contigus 11,
- des moyens pour renverser 16 les objets dits contigus 11 maintenus afin de séparer les objets 9 et provoquer la chute des objets non maintenus 13,
- des moyens pour évacuer 17 les objets séparés 14 un par un de façon cadencée selon un pas prédéterminé.

Plus particulièrement, dans le premier mode de réalisation représenté aux figures 1 et 2, les moyens de transport 3 et 4 des objets 9 sont constitués par la combinaison d'au moins deux transporteurs sans fin 18 et 19.

Le premier transporteur 18 est un ensemble convoyeur dont la surface porteuse de charge 6 décrit une courbe fermée tournant dans un plan sensiblement vertical. Ce convoyeur 18 présente une zone d'alimentation 10 par laquelle on amène en permanence des objets en vrac 9, une zone d'accumulation 8 apte à contenir les dits objets amenés en vrac, une zone de séparation 20 dans laquelle certains objets 11 sont maintenus et une zone de délivrance 21 à partir de laquelle on évacue les objets séparés 14 un par un de façon cadencée selon un pas donné.

Le deuxième transporteur 19 est constitué par un ensemble convoyeur dont la surface porteuse de charge est rectiligne et disposée sous la surface porteuse 6 du premier convoyeur 18 dans sa zone de délivrance 21. Cette disposition est telle que le convoyeur 19 est apte à recevoir les objets délivrés et séparés 14 afin de les évacuer un par un de façon cadencée selon un pas prédéterminé.

La surface porteuse 6 du premier convoyeur est intérieure à la courbe fermée. La zone d'alimentation 10 et la zone d'accumulation 8 sont prévues à la partie intérieure inférieure 22 du convoyeur 18, la zone de délivrance 21 est prévue à la partie intérieure supérieure 23 du convoyeur 18, la surface porteuse intérieure 6 du convoyeur constituant la zone de séparation 20.

Ce premier convoyeur 18 pourra être notamment constitué par un ensemble circulaire qui se présente sous la forme d'un cylindre ou d'un cylindre à facettes et dont la largeur est prévue en fonction des objets à manipuler et à véhiculer; l'axe de ce cylindre étant notamment parallèle au plan de pose.

Les caractéristiques dimensionnelles de ce convoyeur 18 sont bien entendues fixées par la dimension maximale des objets manipulés, mais aussi par la cadence à laquelle il est alimenté et la cadence nécessaire pour alimenter la machine de traitement d'objets en objets séparés un par un selon un pas prédéterminé. Par exemple, on remarquera que l'on obtient de bons résultats avec un convoyeur 18 dont le diamètre est de 1 ordre de 1 à 3 m, dont la largeur est de l'ordre de 40 cm à 1 m et dont la vitesse de rotation est comprise entre 2 et 20 tours/minute. Bien entendu, ces dimensions sont nullement limitatives et peuvent être adaptées en fonction des besoins.

En ce qui concerne la réalisation du deuxième convoyeur 19 dont la surface porteuse de charge 7 est rectiligne et de construction connue de l'homme de métier dont les dimensions sont adaptées aux objets à véhiculer, et dont la vitesse de déplacement est fonction de la cadence et du pas séparant les objets souhaités par la machine à alimenter.

Il est à remarquer que, dans le premier mode de réalisation décrit aux figures 1 et 2, les moyens d'alimentation 24 par lesquels on amène en permanence les objets 9 en vrac dans la zone d'accumulation 8 sont constitués par un troisième convoyeur 25 dont la surface porteuse 5 est rectiligne et disposée au-dessus de la surface porteuse 6 du premier convoyeur 18 dans la zone d'accumulation 10 de telle manière à déposer en vrac les objets 9 à manipuler.

Ce convoyeur 25 peut être de construction similaire au convoyeur de délivrance 19, ses caractéristiques dimensionnelles et sa vitesse linéaire dépendant des objets 9 à manipuler et de la cadence souhaitée. Il sera tel que l'on ait une alimentation en objet 9 en surnombre de manière à toujours avoir une accumulation d'objets dans la zone tampon 8.

Selon la présente invention, tout au long de la surface porteuse 6 dans la zone de séparation 20, on prévoit des moyens de retenue 15 pour maintenir en contact avec celle-ci les objets contigus 11. Ces moyens de retenue sont mis en action d'une part dans la zone de séparation 20, qui dans le convoyeur représenté à la figure 1 est le demi-cercle de gauche lorsque la rotation du convoyeur 18 s'effectue dans le sens représenté par la flèche 26 mais, ils pourraient être maintenus lors de la descente dans la partie droite de la courbe en cas de saturation du convoyeur 19.

Ces moyens de retenue 15 sont notamment constitués par une multitude de dispositifs préhenseurs 27 disposés à intervalles réguliers le long de la surface porteuse, ces intervalles étant fonction de la nature des objets à véhiculer. Ils ont pour but de maintenir en contact les objets 11 sur la surface porteuse 6 lors de la préparation et la séparation des objets afin de ne délivrer les objets séparés qu'unitairement sans production de double.

Ces dispositifs préhenseurs 27 utilisent des techniques connues de l'Homme de l'Art et sont choisis parmi les dispositifs pneumatiques d'aspiration, les dispositifs magnétiques et électromagnétiques, les dispositifs mécaniques à griffes ou à pincement.

Selon la présente invention, pour faciliter la séparation des objets dans la zone de séparation 20, on complète les myens de retenue mécaniques 15 par des moyens de positionnement 28 espacés régulièrement tout au long de la surface porteuse 6 du convoyeur 18. Ces moyens de positionnement sont notamment constitués par des tasseaux 29 situés sur la périphérie du convoyeur 18 et dont l'espacement est fonction de la nature des objets à manipuler. Le but de ces tasseaux 29 est de faciliter la séparation des objets 9 et d'améliorer l'efficacité des dispositifs préhenseurs 27.

Il est à remarquer que, selon la présente invention, les moyens pour renverser 16 les objets maintenus 11 sont constitués par le premier convoyeur 18 dont la surface porteuse 6 décrit une courbe fermée, Plus exactement, le renversement de l'objet s'effectue par le renversement de sa face 12 en contact avec la surface porteuse 6.

Dans le premier mode de réalisation représenté aux figures 1 et 2, les moyens pour évacuer 17 les objets séparés 14 sont constitués par le deuxième convoyeur 19. Ce convoyeur reçoit les objets 14, lorsque l'on cesse le maintien du contact entre l'objet 11 et la surface porteuse 6. Par ailleurs, le pas prédéterminé nécessaire à l'alimentation de la machine est fonction des vitesses relatives entre le premier convoyeur 18 et le deuxième 19.

Le dispositif de séparation et d'espacement d'objets 1 qui vient d'être décrit en référence aux figures 1 et 2 permet la mise en oeuvre du procédé de la présente invention, son fonctionnement est le suivant:

- les objets en vrac 9 arrivent par le convoyeur d'alimentation 25 et tombent à l'intérieur du convoyeur circulaire 18 qui est en rotation. Les objets 9 se placent entre les tasseaux 29 et sont entraînés en rotation par le convoyeur 18.

  Les moyens de retenue 15 sont alors mis en action, de ce fait les objets 11 contigus à la surface porteuse 6 sont maintenus contre la périphérie intérieure de l'ensemble circulaire alors que le ou les objets superposés 13 dans la zone de séparation 20 retombent par gravité car ils sont entraînés et non maintenus;

- lorsqu'un objet contigu 11 maintenu arrive dans la partie supérieure 23 du convoyeur 18, les effets des moyens de retenue 15 sont annulés afin de laisser tomber l'objet 14 sur le convoyeur d'évacuation 19.
- ces différentes opérations se répètent successivement, ce qui permet d'égrener les objets placés en vrac à l'entrée du système, en les séparant les uns des autres à un pas voulu.

Grâce à ce système de manutention continue, on assure une alimentation fiable en continu depuis un vrac d'objets de formes diverses de masses volumiques diverses, mous de par leur nature ou enveloppés dans un emballage souple de matériaux divers, de machines de traitement d'objets demandant en entrée des objets séparés les uns des autres et ce à haute cadence. Ce système permet en outre la succession de ces objets sans production de double et élimine les inconvénients souvent rencontrés lors de l'introduction sur machine de deux produits ensembles tels que notamment les bourrages, les casses ou les erreurs de tri.

Quoique ce système soit déjà très fiable, pour éviter la production de double lors de cadences élevées, complémentairement à la chute des objets provoqués naturellement par gravité, on provoque mécaniquement la chute des objets entraînés et non maintenus 13 par des moyens complémentaires les écartant progressivement de la surface porteuse de charge 6 au cours de son renversement.

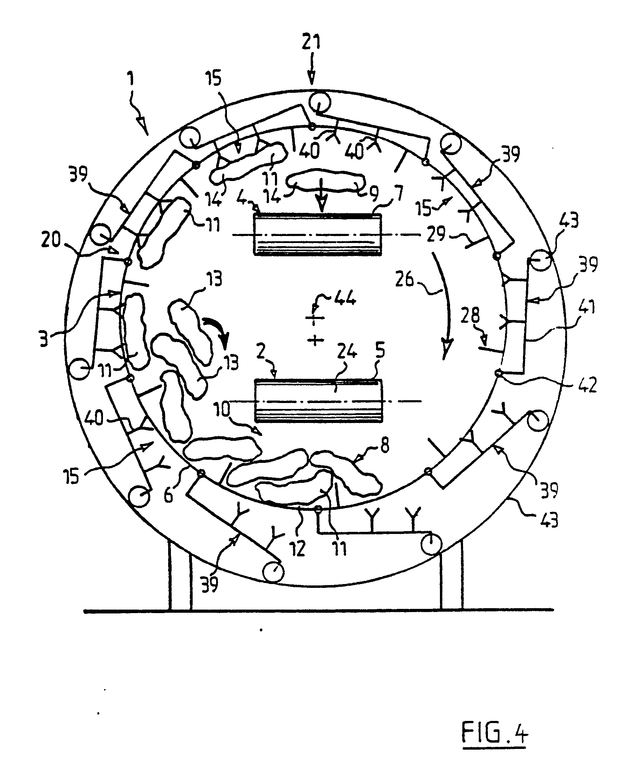

Selon l'invention, ce procédé pourra notamment être mis en oeuvre dans un autre mode de réalisation notamment représenté à la figure 4.

Cette autre réalisation du dispositif de séparation et d'espacement d'objets 1 reprend les différents éléments essentiels constituant celui décrit ci-dessus en regard des figures 1 et 2. Toutefois, il comporte des moyens complémentaires pour provoquer mécaniquement la chute des objets entraînés et non maintenus 13 aptes à les écarter progressivement de la surface porteuse de charge 6 au cours de son renversement.

En effet, on retrouve comme dans le cas précédent les moyens de transport 2 à 4, la zone d'alimentation 10, la zone d'accumulation 8 apte à accumuler les objets 9 amenés en vrac, la zone de séparation 20 dans laquelle on maintient certains des objets contigus 11 ainsi que la zone de délivrance 21 à partir de laquelle on évacue les objets séparés 14 un à un de façon cadencée.

En plus de la chute gravitaire des objets, pour provoquer mécaniquement la chute des objets entraînés et non maintenus 13, les moyens complémentaires sont constitués par une multitude de dispositifs poussoirs 39 disposés à intervalles réguliers tout au long de la surface porteuse 6, escamotables progressivement dans la zone de séparation 20.

Dans ce mode de réalisation illustré à la figure 4, les moyens de retenue 15 sont constitués par un ou plusieurs dispositifs préhenseurs 40, et chaque dispositif poussoir 39 est substantiellement constitué respectivement par ces dispositifs préhenseurs 40.

Plus précisément, comme le montre la figure, chaque dispositif poussoir 39 est constitué par un bras de levier 41 fixé et articulé à la surface porteuse 6 en un point repéré 42. Sur ce bras de levier 41 sont fixés le ou les dispositifs préhenseurs 40 et montés à coulissement libre par rapport à la dite surface porteuse 6. De plus, l'extrémité du bras de levier 41 porte un dispositif de roulement 43 tel qu'une roulette ou autre.

Selon la présente invention, les dispositifs poussoirs préhenseurs 39 - 40 portés par la surface porteuse 6 en mouvement et articulés vis-à-vis de cette dernière, sont actionnés par une came fixe 43 excentrée par rapport à l'axe de rotation 44 des moyens de transport 3, de façon à ce que les dits dispositifs poussoirs préhenseurs 39 - 40 soient parfaitement escamotés dans les zones d'alimentation 10 et d'accumulation 8, puis sortent progressivement dans la zone de séparation 20 pour d'une part maintenir les objets dits contigus 11 et d'autre part pousser et faire chuter les objets dits non maintenus 13 et enfin soient complètement saillants dans la zone de délivrance 21 des objets séparés 14. Ceci est nettement illustré à la figure 4.

Il est à noter que la came fixe 43 peut être rendue solidaire du sol par un bâti, non représenté. D'autre part les dimensionnements des dispositifs 39 dépendent essentiellement des encombrements des moyens de transport 3 et de la came fixe 43 afin d'autoriser le fonctionnement décrit ci-dessus. De plus, les moyens de roulement 43 évitent le blocage du dispositif et les à-coups lors du fonctionnement.

Naturellement, d'autres systèmes de manutention continue peuvent mettre en oeuvre le procédé de la présente invention et notamment celui représenté à la figure 3.

La figure 3 représente un mode de réalisation qui peut être appelé "symétrique" du système de manutention continu montré à la figure 1. En effet, il comporte les mêmes éléments essentiels mais placés d'une manière opposée à ceux du premier système.

La différence essentielle entre ces deux systèmes réside dans le fait que la surface porteuse 6 du premier convoyeur 18 est placée extérieurement et non pas intérieurement. Cette nouvelle dispositif oblige d'avoir une position respective des moyens décrits ci-dessus différents.

En effet, les zones d'alimentation 10 et d'accumulation 8 sont prévues à la partie supérieure extérieure 30, la zone de délivrance 21 étant alors prévue à la partie inférieure extérieure 31. La surface porteuse 6 extérieure du convoyeur 18 constitue de la même manière la zone de séparation 20.

Il est à remarquer que dans ce mode de réalisation, les moyens de retenue 15 sont constitués des mêmes dispositifs préhenseurs 27 mais sont dirigés vers l'extérieur du convoyeur 18; de même, ils sont complémentés par les moyens de positionnement, notamment les tasseaux 29 placés sur la périphérie extérieure du convoyeur.

Le fonctionnement du système représenté à la figure 3 est le suivant:

- on amène des objets en vrac 9 par le convoyeur d'alimentation 25,
- les objets 9 tombent sur la partie supérieure du convoyeur et notamment sur sa surface porteuse 6,
- on met en action les moyens de retenue 15 afin de garder le contact, lors de la rotation du convoyeur 18, entre l'objet 11 et la surface porteuse 6,
- de par la rotation du convoyeur 18, on sépare les objets entraînés et on provoque la chute des objets non maintenus 13,
- après une rotation du convoyeur 18 de 180 degrés, on cesse l'action des moyens de retenue afin de délivrer les objets séparés 14 et on les évacue un par un de façon cadencée selon un pas prédéterminé par le convoyeur d'évacuation 19.

Alors que dans le système précédent, les objets non maintenus 13 chutant sont recyclés automatiquement par construction dans la zone d'accumulation 8, dans le système représenté à la figure 3, il faut prévoir un bac de réception 31 afin de recueillir ces objets en vue de les rediriger vers le convoyeur d'alimentation 25.

Par extrapolation, on pourrait également imaginer un système de manutention dérivé des systèmes précédents 4 dans lesquels les moyens de transport des objets 3 et 4 sont constitués par un transporteur sans fin 37 dont le chemin décrit dans l'espace non plus une courbe fermée mais une courbe hélicoïdale à une seule spire. Dans ce cas, les moyens pour renverser les objets sont constitués par les parties courbes du transporteur sans fin.

## Revendications

1. Dispositif de séparation et d'espacement d'objets de formes diverses, mous de par leur nature, ou enveloppés dans un emballage souple, le dispositif comportant:

- des moyens de transport (3) et de renversement (16) desdits objets (9) constitués par un transporteur dont la surface porteuse de charge décrit une courbe fermée dans un plan sensiblement vertical qui comprend une surface porteuse de charge (6) en mouvement continu définissant un chemin de déplacement, permettant de véhiculer les objets (9) au cours duquel on prévoit une zone d'alimentation (10) d'objets en vrac, une zone d'accumulation (8) des objets à manipuler, une zone de séparation (20) dans laquelle on prélève des objets (9) de la zone d'accumulation (8) pour les séparer et pour provoquer la chute par gravité des objets non maintenus et finalement pour les délivrer, un par un, de façon cadencée, selon un pas prédéterminé dans une zone de délivrance (21) des objets, située sensiblement à 180° de la zone d'alimentation (10),
- des moyens d'alimentation (5) par lesquels on amène, par une chute par gravité, dans ladite zone d'accumulation (8) les objets (9) en vrac afin que certains des objets (11) présentent une surface (12) en contact avec ladite surface porteuse (6),
- des moyens de retenue (15) pour maintenir en contact avec ladite surface porteuse (6) les objets contigus à celle-ci, constitués par une multitude de dispositifs préhenseurs (27 ou 40) pneumatiques d'aspiration disposés à intervalles réguliers tout autour de la périphérie du transporteur sans fin et complétés par des moyens de positionnement (28) situés en alternance avec lesdits dispositifs préhenseurs (27 ou 40) et espacés régulièrement en fonction de la nature des objets à manipuler autour de la périphérie du transporteur sans fin,
- des moyens pour évacuer (17) les objets séparés (14), par une chute par gravité, un par un, de façon cadencée, selon un pas prédéterminé en dehors de la zone de délivrance (21).

2. Dispositif selon la revendication 1, caractérisé par le fait que les moyens de positionnement (28) sont constitués par des tasseaux (29).

3. Dispositif selon la revendication 1, caractérisé par le fait qu'il comporte des moyens pour écarter progressivement de la surface porteuse de charge (6) au cours de son renversement les objets afin de provoquer mécaniquement la chute des objets entraînés et non maintenus (13).

4. Dispositif selon la revendication 3, caractérisé par le fait que les moyens pour écarter progressivement de la surface porteuse de charge (6) au cours de son renversement les objets et pour provoquer mécaniquement la chute des objets entraînés et non maintenus (13) sont constitués par une multitude de dispositifs poussoirs (39) disposés à intervalles réguliers autour de la circonférence de la surface porteuse (6) escamotables progressivement dans la zone de séparation (20).

5. Dispositif selon la revendication 4, caractérisé par le fait que chaque dispositif poussoir (39) est constitué respectivement par chacun des dispositifs préhenseurs (40).

6. Dispositif selon la revendication 5, caractérisé par le fait que les dispositifs poussoir-préhenseur (39 - 40) portés par la surface porteuse (6) en mouvement, sont actionnés par une came fixe (43) excentrée par rapport à l'axe de rotation (44) des moyens de transport (3) de façon à ce que les dits dispositifs poussoir-préhenseur (39 - 40) soient parfaitement escamotés dans la zone d'alimentation (10) puis sortent progressivement dans la zone de séparation (20) pour, d'une part maintenir les objets dits contigus (11), et d'autre part pousser et faire chuter les objets dits non maintenus (13) et enfin soient complètement saillants dans la zone de délivrance (21) des objets séparés (14).

7. Dispositif selon la revendication 1, caractérisé par le fait que les moyens d'alimentation (5) et les moyens (17) pour évacuer les objets sont constitués par des transporteurs sans fin formés par des ensembles convoyeurs dont les surfaces porteuses de charge sont rectilignes, la surface du convoyeur d'alimentation étant disposée au-dessus de ladite surface porteuse dans la zone d'alimentation et la surface du convoyeur d'évacuation étant disposée au-dessous de la zone de délivrance (21).

8. Dispositif selon la revendication 7, caractérisé par le fait que la surface porteuse (6) des moyens de transport est intérieure, la zone d'alimentation (10) et la zone d'accumulation (8) étant prévues à la partie inférieure intérieure (22) du convoyeur (18) la zone de délivrance (21) étant prévue à la partie intérieure supérieure (23) du convoyeur (18) la surface porteuse intérieure (6) du convoyeur (18) constituant la zone de séparation (20).

9. Dispositif selon la revendication 7, caractérisé par le fait que la dite surface porteuse (6) est extérieure, les zones d'alimentation (10) et d'accumulation (8) étant prévues à la partie supérieure extérieure (30) la zone de délivrance (21) étant prévue à la partie inférieure extérieure (31), la surface porteuse (6) extérieure du convoyeur (18) constituant la zone de séparation (20).

## Patentansprüche

1. Vorrichtung, die dazu bestimmt ist, ihrer Natur nach welche oder in eine weiche Verpackung eingewickelte Gegenstände von verschiedener Form zu trennen und in einem gewissen Abstand anzuordnen, aus:

- Mitteln zum Transportieren (3) und zum Umkehren (16) der besagten Gegenstände (9), aus einem Förderer, der eine geschlossene Kurve

in einer im wesentlichen vertikalen Ebene beschreibt, wobei dieser Förderer eine in dauernder Bewegung befindliche, lasttragende Oberfläche (6) aufweist, die eine Förderbahn für die Gegenstände (9) definiert, mit einer Zone (10) zur Zuführung von losen Gegenständen, einer Zone (8) zur Ansammlung der zu handhabenden Gegenstände, und einer Trennzone (20), in der Gegenstände (9) aus der Ansammlungszone (8) entnommen werden, um sie zu trennen, und um die nicht festgehaltenen Gegenstände infolge der Schwerkraft herunterfallen zu lassen, und schließlich, um sie einzeln nacheinander in einem vorgegebenen Abstand in einer Ausgabezone (21) auszugeben, die unter einem Winkel von ungefähr 180° bezüglich der Zuführungszone (10) angeordnet ist;

- Zuführungsmitteln (5), durch die die losen Gegenstände (9) zugeführt werden und infolge der Schwerkraft in die besagte Ansammlungszone (8) herabfallen, damit bei manchen der Gegenstande (11) eine Oberfläche (12) an der besagten tragenden Oberfläche (6) anlegt;

- Zurückhaltemitteln (15), um die an der besagten tragenden Oberfläche (6) anliegenden Gegenstände in Kontakt mit dieser Oberfläche zu halten, aus einer Vielzahl von pneumatischen Saug-Greifvorrichtungen (27 oder 40), die in gleichmäßigen Abständen um den ganzen Umfang des endlosen Förderers angeordnet sind und durch abwechselnd vorgesehene Positionierungsmittel (28) vervollständigt werden, die in Abhängigkeit von der Art der zu handhabenden Gegenstände in gleichmäßigen Abständen um den Umfang des endlosen Förderers angeordnet sind;

- Mitteln (17), um die getrennten Gegenstände (14) durch Herabfallen infolge der Schwerkraft einzeln nacheinander in einem vorgegebenen Abstand aus der Ausgabezone (21) abzutransportieren.

2. Vorrichtung gemäß Anspruch 1, dadurch gekennzeichnet, daß die Positonierungsmittel (28) aus Tragleisten (29) bestehen.

3. Vorrichtung gemäß Anspruch 1, dadurch gekennzeichnet, daß sie Mittel aufweist, um die Gegenstände im Laufe ihrer Umkehrung zunehmend von der lasttragenden Oberfläche (6) abzurücken, damit auf mechanische Weise bewirkt wird, daß die mitgerissenen und nicht festgehaltenen Gegenstände (13) herunterfallen.

4. Vorrichtung gemäß Anspruch 3, dadurch gekennzeichnet, daß die Mittel, um die Gegenstände während der Umkehrung zunehmend von der lasttragenden Oberfläche (6) abzurücken, und um auf mechanische Weise zu bewirken, daß die mitgerissenen und nicht festgehaltenen Gegenstände (13) herabfallen, aus einer Vielzahl von Stoßvorrichtungen (39) bestehen, die in gleichmäßigen Abständen um den Umfang der tragenden Oberfläche (6) angeordnet sind und in der Trennzone (20) zunehmend ausgefahren werden können.

5. Vorrichtung gemäß Anspruch 4, dadurch gekennzeichnet, daß jede Stoßvorrichtung (39) von einer Greifvorrichtung (40) gebildet wird.

6. Vorrichtung gemäß Anspruch 5, dadurch gekennzeichnet, daß die Stoß/Greif-Vorrichtungen (39 - 40), die von der in Bewegung befindlichen tragenden Oberfläche (6) getragen werden, durch eine stationäre Nockenscheibe (43) betätigt werden, die bezüglich der Rotationsachse (44) der Transportmittel (3) exzentrisch angeordnet ist, und zwar in einer solchen Weise, daß die besagten Stoß/Greif-Vorrichtungen (39 - 40) in der Zuführungszone (10) vollständig eingezogen sind, danach in der Trennzone (20) zunehmend ausgefahren werden, um einerseits die sogenannten anliegenden Gegenstände (11) festzuhalten, und andererseits de sogenannten nicht festgehaltenen Gegenstände (13) wegzustoßen und herabfallen zu lassen, und schließlich in der Ausgabezone (21) der getrennten Gegenstände (14) ganz ausgefahren sind.

7. Vorrichtung gemäß Anspruch 1, dadurch gekennzeichnet, daß die Mittel (5) zum Zuführen, und die Mittel (17) zum Abtransportieren der Gegenstände aus endlosen Förderern bestehen, die von Förderbändern gebildet werden, deren lasttragende Oberflächen geradlinig sind, wobei die Oberfläche des Förderbandes für die Zuführung in der Zuführungszone über der besagten tragenden Fläche, und die Oberfläche des Förderbandes für den Abtransport unter der Ausgabezone (21) angeordnet ist.

8. Vorrichtung gemäß Anspruch 7, dadurch gekennzeichnet, daß die tragende Oberfläche (6) der Transportmittel eine innere Oberfläche ist, wobei die Zuführungszone (10) und de Ansammlungszone (8) in dem inneren, unteren Teil (22) des Förderers (18) vorgesehen sind, die Ausgabezone (21) in dem oberen, inneren Teil (23) des Förderers (18) vorgesehen ist, und die innere, tragende Oberfläche (6) des Förderers (18) die Trennzone (20) bildet.

9. Vorrichtung gemäß Anspruch 7, dadurch gekennzeichnet, daß die besagte tragende Oberfläche (6) eine äußere Oberfläche ist, wobei die Zuführungszone (10) und die Ansammlungszone (8) in dem äußeren, oberen Teil (30) vorgesehen sind, die Ausgabezone (21) in dem äußeren, unteren Teil (31) vorgesehen ist, und die äußere, tragende Oberfläche (6) des Förderers (18) die Trennzone (20) bildet.

## Claims

1. A device for separation and spacing of objects of various shapes and naturally soft or wrapped in a flexible packing, the device including:

- means of conveyance (3) and inversion (16) of the said objects (9), consisting of a conveyor the load-bearing surface of which decribes a closed curve in a substantially vertical plane and which comprises a load-bearing surface (6) in continuous motion, defining a path of movement which enables the objects (9) to be transported and along which a feed zone (10) is provided for loose objects, a zone (8) for accumulation of the objects to be handled, a separation zone (20) in which objects (9) are taken from the accumulation zone (8) in order to separate them and to cause objects not held to fall by gravity and finally to deliver them one by one rhythmically at a predetermined pace into a zone (21) for delivery of the objects, situated at substantially 180° from the feed zone (10);

- feed means (5) by which the loose objects (9) by falling by gravity are led into the said accumulation zone (8) in order that certain of the objects (11) present one surface (12) in contact with the said bearing surface (6);

- retainer means (15) for keeping in contact with the said bearing surface (6) the objects contiguous with it and consisting of a multiplicity of pneumatic suction gripper devices (27 or 40) arranged at regular intervals all round the periphery of the endless conveyor and completed by positioner means (28) alternating with the said gripper devices (27 or 40) and regularly spaced round the periphery of the endless conveyor as a function of the nature of the objects to be handled; and

- means (17) of discharging the separated objects (14) by falling one by one by gravity rhythmically at a predetermined pace out of the delivery zone (21).

2. A device as in Claim 1, characterized by the fact that the positioner means (28) consist of brackets (29).

3. A device as in Claim 1, characterized by the fact that it includes means of progressively distancing the objects from the load-bearing surface (6) during the course of its inversion in order to cause mechanically the fall of objects carried along and not held (13).

4. A device as in Claim 3, characterized by the fact that the means of progressively distancing the objects from the load-bearing surface (6) during the course of its inversion and causing mechanically the fall of objects carried along and not held (13), consist of a multiplicity of pusher devices (39) arranged at regular intervals round the circumference of the bearing surface (6) and progressively retractable in the separation zone (20).

5. A device as in Claim 4, characterized by the fact that each pusher device (39) consists respectively of one of the gripper devices (40).

6. A device as in Claim 5, characterized by the fact that the pusher-gripper devices (39 - 40) carried by the bearing surface (6) in motion are actuated by a fixed cam (43) eccentric with respect to the axis of rotation (44) of the conveyor means (3) so that the said pusher-gripper devices (39 - 40) are perfectly retracted in the feed zone (10), then come out progressively in the separation zone (20) in order on the one hand to hold the objects said to be contiguous (11) and on the other hand to push and let fall the objects said to be not-held (13), and finally are completely salient in the delivery zone (21) for the separated objects (14).

7. A device as in Claim 1, characterized by the fact that the means (5) of feeding and the means (17) of discharging the objects consist of endless conveyors formed by conveyor units the load-bearing surfaces of which are straight, the surface of the feed conveyor being arranged above the said bearing surface in the feed zone and the surface of the discharge conveyor being arranged below the delivery zone (21).

8. A device as in Claim 7, characterized by the fact that the bearing surface (6) of the conveyor means is on the inside, the feed zone (10) and the accumulation zone (8) being provided at the lower inner portion (22) of the conveyor (18), the delivery zone (21) being provided at the upper inner portion (23) of the conveyor (18), and the inner bearing surface (6) of the conveyor (18) forming the separation zone (20).

9. A device as in Claim 7, characterized by the fact that the said bearing surface (6) is on the outside, the feed (10) and accumulation (8) zones being provided at the upper outer portion (30), the delivery zone (21) being provided at the lower outer portion (31), and the outer bearing surface (6) of the conveyor (18) forming the separation zone (20).

FIG.1

FIG.2

FIG.3

FIG.4